# EUROPEAN PATENT SPECIFICATION

(11) **EP 1 153 389 B1**
(45) Date of publication and mention of the grant of the patent: **06.11.2002**
(21) Application number: 00900268.4
(22) Date of filing: 13.01.2000
(51) Int. Cl.: G11B 5/855, C09J 7/02, B65H 37/00, G06K 19/06

(54) **A TAPE AND A METHOD FOR APPLYING A MAGNETIC LAYER TO AN ARTICLE**
EIN BAND UND VERFAHREN ZUM AUFTRAGEN EINER MAGNETISCHEN SCHICHT AUF EINEN GEGENSTAND
RUBAN ET PROCEDE D'APPLICATION D'UNE COUCHE MAGNETIQUE SUR UN ARTICLE

(30) Priority: 23.01.1999 GB 9901420
(43) Date of publication of application: 14.11.2001
(73) Proprietor: Wright, John Omri, Acrefair, Wrexham LL14 3ST (GB); Hodgson, Martin Edward, Camberley, Surrey GU16 5LN (GB)
(72) Inventor: Wright, John Omri, Acrefair, Wrexham LL14 3ST (GB); Hodgson, Martin Edward, Camberley, Surrey GU16 5LN (GB)
(74) Representative: Geoffrey Owen & Company
(86) International application number: GB0000067
(87) International publication number: WO00043994

(56) References cited:
- CH-A- 688 293
- US-A- 5 073 221
- US-A- 5 383 687
- PATENT ABSTRACTS OF JAPAN vol. 007, no. 285 (C-201), 20 December 1983 (1983-12-20) & JP 58 162685 A (SUMITOMO SURIIEMU KK), 27 September 1983 (1983-09-27)

## Description

The present invention is concerned with the application to articles of magnetic layers which can be selectively magnetised to store machine readable information, and in particular with a tape and a method for use in such application.

Magnetic coatings are commonly applied to a variety of substrates and used to carry magnetically recorded information. These are familiar in the form of bank cards, airline boarding passes and in a host of other similar applications.

The magnetic coating needs to be capable of being magnetised in order to encode information. The coating may for example take the form of a magnetisable metal foil, but more typically comprises a magnetisable material - in particular a metal oxide - which is ground down to a fine pigment and dispersed into a solution (e.g. an acrylic co-polymer) and then coated onto a substrate. Magnetic audio and video tapes are formed in this way. The polymer serves as a pigment "binder", analogously to the binder in a paint, holding the particles together and forming a coherent coating on the substrate.

In practice this type of magnetic coating is commonly formed not directly on the item - e.g. an airline boarding card - for which it is intended. Instead the solution comprising magnetic pigment and binder is first coated onto a carrier substrate such as a polyester film, which may have a release material on the side to be coated. A non-tacky, heat activated adhesive is then coated on top of the magnetic coating layer, and the resulting combination is slit to the required width and then wound into rolls.

Because of the nature of the adhesive used, the wound combination does not adhere strongly to itself, allowing the roll to be unwound in order to apply the magnetic stripe to the boarding card. The adhesive coated face is placed in contact with the card and heat and pressure are applied to melt the adhesive and cause it to bond to the card. The polyester carrier film may then be peeled off. The optional release layer may assist in allowing the carrier to separate from the coating. At this point in the process the coating, although having insufficient strength to be readily handled on its own, is supported by the substrate (e.g. the card) to which it has been bonded.

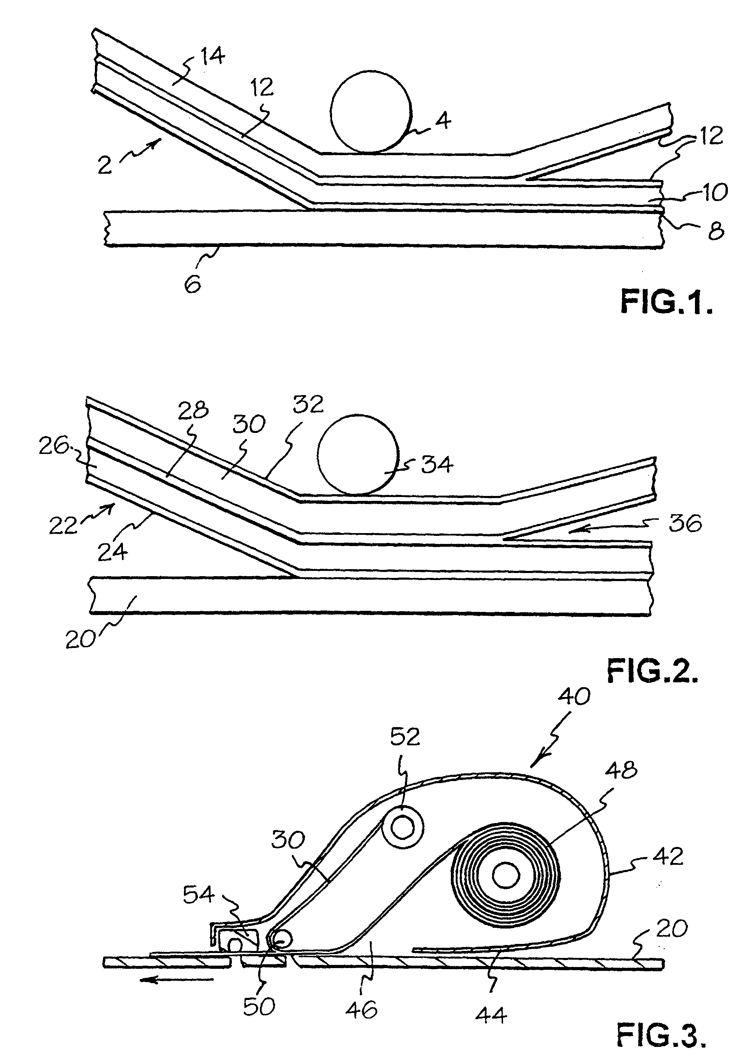

The application of the magnetic layer using this conventional technology is illustrated in Fig. 1, which shows a tape generally labeled 2 being drawn beneath a heated roller 4 above an article 6 (e.g. a credit card) to which the magnetic layer is to be applied. The tape comprises, in order from the lowermost adhesive side up:-
the heat activated adhesive layer 8,
the magnetic layer 10,
a release layer 12 coupling the magnetic layer to,
a substrate formed as a thin carrier film 14.

After passing beneath the roller, the tape is split - the carrier film 14 is peeled off, leaving behind the magnetic layer/adhesive and also part of the release layer.

The primary disadvantages of this process are due to the heat required to cause the adhesive to bond and hold the magnetic coating in place. There may for example be a requirement to bond a magnetic strip to a card which is also coated with a heat sensitive ink for thermal printing, in which case the heat involved in application of the conventional magnetic coating to form the strip may cause premature darkening of the ink. Other requirements involve bonding the magnetic coating to thin cards of poly vinyl chloride or other materials which deform when subject to the necessary heat and pressure.

In some cases there are difficulties in finding a heat sensitive adhesive capable of bonding to the material forming the substrate - examples of substrates which can give rise to such difficulties are untreated polyethylene, silicone polymers and polytetrafluoroethylene (PTFE), or substrates coated with these materials. These and other materials are recognised in the adhesives industry as having surface properties the thermodynamics of which are not generally conducive to good adhesion.

There are of course adhesives which do not require activation by application of heat, but typically these could not be substituted for the heat sensitive adhesive in tape of the type described above, since when rolled the adhesive of such a tape would adhere to the reverse of the carrier film, making it difficult or impossible to unroll and use the tape.

The present invention is intended to provide an improved means of providing a magnetic layer on an article.

In accordance with a first aspect of the present invention, there is a tape for applying a magnetic layer to an article comprising a substrate, the magnetic layer which is supported on or by the substrate and which can be selectively magnetised to thereby store machine readable information, said tape being characterised by a pressure sensitive adhesive, and a release agent, such that when the tape is arranged in a roll, the release agent serves to prevent or at least reduce adhesion of the tape to itself, facilitating unrolling of the tape, and such that the adhesive can be pressed against the article to adhere at least the magnetic layer to the article.

Due to its use of pressure sensitive adhesive, the tape according to the present invention makes it possible to form the magnetic layer on the article without the disadvantageous application of heat Light pressure only is required. The problem of damage to the underlying article is thus avoided. A tape using pressure sensitive adhesive suitable for attaching the magnetic layer securely to the article could not normally be wound into a roll, since the pressure sensitive adhesive would stick to the reverse of the substrate, rendering it difficult or impossible to unroll the tape and use it. In the present invention, this problem is overcome by provision of the release agent, allowing the tape to be unrolled for use.

Particularly suited to the present invention are adhesives which are normally tacky at normal room temperatures and which bond to the intended article under the application of light pressure only, no heat being required.

The magnetic layer preferably comprises magnetic pigment in a binder. Such layers are known e.g. for bank cards.

Such layers are typically too fragile to be handled on their own and in the present invention the substrate serves to support the magnetic layer at least until it is applied to the article. Thereafter the substrate may in some embodiments of the present invention remain in place, attached to the article. The ordering of the layers may for example be such that the substrate lies over and protects the magnetic layer once attached to the article.

In particularly preferred embodiments of the present invention, the magnetic layer is coupled to the substrate in such a manner that the substrate can be removed, once the magnetic layer has been adhered to the article by means of the adhesive, without damage to the magnetic layer, leaving the magnetic layer adhered to and supported on the article, no further support being contributed by the substrate. This is advantageous with regard to security, since it is not possible to remove the magnetic layer in one piece and fix it to another card, due to the nature of the pressure sensitive adhesive (these adhesives are typically relatively soft and rubbery) and the low strength of the magnetic layer.

In accordance with a second aspect of the present invention, there is a tape comprising a substrate an electromagnetically active layer which is supported on or by the substrate, a pressure sensitive adhesive, and a release agent, such that when the tape is arranged in a roll, the release agent serves to prevent or at least reduce adhesion of the tape to itself, facilitating unrolling of the tape, and such that the adhesive can be brought into contact with an article and adhere at least the magnetic layer to the article.

Electromagnetically active means a material which is affected by radiation (for example X-rays, Radio Frequency radiation from radio and television transmitters and computer circuits; various radiations resulting from nuclear breakdown). In being affected by such radiation, these materials tend to absorb the radiation and block its passage. Consequently they are commonly used to form shields against such radiations.

The layer in question may in particular be an electromagnetic shield.

Specific embodiments of the present invention will now be described, by way of example only, with reference to the accompanying drawings in which :-
Fig. 1 illustrates in section a conventional, magnetic tape being applied to an article in known manner,
Fig.2 illustrates in section a magnetic tape according to the present invention being applied to an article;
Fig.3 illustrates in section a dispenser for magnetic tape in accordance with the present invention.

An example of a pressure sensitive adhesive suitable for use in the present invention may be manufactured as follows. 40 parts of natural crepe rubber is masticated (mixed) with 60 parts of the glycerol ester of partially hydrogenated natural gym rosin in a Z-blade mixer. Hexane is added as a solvent, to a total solids content of 40%. An anti-oxidant for the rubber is added at 1% on solids. After thorough mixing, the adhesive solution can for example be spread onto a cellulose film to give a dry coated weight of 25 grams per square metre. The film is then passed through a heated drying oven.

It is found that the coated film adheres strongly to surfaces including stainless steel immediately upon contact, after smoothing down using hand pressure only. No further pressure, heat or other means of "activating" the adhesive are necessary.

The problem of adhesion of the tape to itself, when using an adhesive e.g. of the type described above, has already been referred to. One way in which this problem can be solved is by provision of a release agent formed as a removable sheet - it may be paper or a film - coated on at least one side with release material which releases from the adhesive without negatively affecting it. The sheet is applied to the adhesive side as an inter-liner. The combined materials are then slit to the desired widths and rolled up. When preparing the product for use, the inter-liner is peeled off and discarded.

Another way in which the problem can be solved is by coating the substrate, at some stage in the manufacturing process, with a release material. When the product is slit and wound into a roll, it is then possible to unroll the product as the adhesive separates easily from the coating on the carrier.

In either case, in order to apply the magnetic layer to the article, such as a supermarket loyalty card, the unwound tape is placed adhesive side down on the article and light pressure is applied to bond the magnetic layer to the article. The layer thus formed is in some cases referred to as a magnetic stripe or "mag-stripe". No heat is required in the application process and only slight pressure is required, so there is no damage of any kind to the card.

A tape embodying the present invention, and a typical mode of application, are illustrated in Fig.2. The article to be coated (e.g. a credit card) is labeled 20. The tape as a whole is labeled 22 and comprises the following layers, in order from the bottom up:-
I. a layer 24 of pressure sensitive adhesive, which is being contacted with the article 20,
ii. the magnetic layer 26 which is being secured by the adhesive to the article,
iii. a strippable release layer 28;
iv. a support substrate 30, formed as a thin carrier film, which initially supports the magnetic layer and
v. a release agent 32 formed by a layer of highly cured silicone, which prevents the tape from adhering fixedly to itself while the tape is arranged in a roll.

The tape and the article are moved (in a direction from left to right in the drawing) relative to a roller 34 which applies pressure to adhere the adhesive to the article. The roller is cold - i.e. not heated. Once adhered to the article 20, the tape is split as seen at 36. The film 30 along with the release agent 32 are peeled away, leaving behind the magnetic layer, supported on the article 20. The illustrated tape is referred to as a "transfere" tape.

The process may be carried out using a dispenser 40 as illustrated in Fig. 3. Here the article to be coated is again labeled 20 and the dispenser comprises a casing 42 having a base surface 44 and an adjacent opening 46. The tape is formed as in Fig.2 and is initially stored on a rotatably mounted roll 48 within the casing. Prior to use, an end portion of the tape's carrier film 30 is peeled away from the remainder of the tape and threaded around a roller 50 disposed at the opening 46 and around a rotatable take up reel 52 within the casing, the take up reel being arranged to be driven (e.g. through gearing or friction rollers, not illustrated) by the roll 48. The threading of the tape results in the adhesive side of the tape being exposed at the opening 46, and by placing the dispenser's base surface against the article to be coated and moving the dispenser relative to the article (in the direction from left to right in the drawing) the magnetic layer 26 can be laid down on the article, the carrier film being automatically peeled away onto the take up reel. The dispenser may further comprise a magnetic encoder head 54 for writing to the magnetic layer as it is laid down. The illustrated head contacts the magnetic layer.

It will be evident to those skilled in the art of pressure sensitive tape in general that when, as in the Fig. 2 example, there are two release coatings, there must be a balance in the properties of the release coatings. The pressure sensitive adhesive must peel away from the release coating, with which it is in contact while on the tape roll, before the magnetic layer releases from the carrier film. With this in view the release for the adhesive should in general be "easy" (i.e. require a small peel force) and for this fully cured silicone coatings may be used. Release of the magnetic layer from its carrier film must be "tighter". This is best defined in terms of a ratio of the peel forces required to separate respectively the adhesive and the magnetic layer from their release surfaces. In practice, a ratio in these forces of around 2:1 to 4:1 is usually sought. This gives a margin for variation in the coatings. It has been found that so called "tight release" silicone coatings as commonly used in adhesive applications typically give insufficiently tight release to the magnetic layer. It has been found necessary to use either specialist modified silicone coatings or to develop "strippable" release coatings.

The strippable release coatings used in certain embodiments of the invention consist of cellulose derivatives such as methyl and ethyl cellulose, often cross linked by e.g. an isocyanate. Particularly suitable are esters of propenoic acid. Currently the most favoured coating comprises the methyl ester commonly known as methyl methacrylate. Other materials may also be suitable. These other materials may include poly vinyl acetate, poly vinyl pyrolidone etc. The choice is governed by the choice of substrate (carrier film) which may for example comprise polymers of ethylene, propylene or cellulose film or polyester film, or paper. When a carrier film formed of polyester is peeled off following bonding of the magnetic layer to the substrate, it is actually the strippable coating which separates from the carrier film, remaining as a very thin layer on the surface of the resulting magnetic stripe. This gives the stripe some protection from abrasion when the user puts the card through a reader, for example.

Other release coatings typically remain adhered either to the carrier film or to the magnetic layer, without being divided between the two as seen e.g. at 36 in Fig. 2.

### EXAMPLE 1.

To one side of a roll of polyester film 23 microns thick and 310 mm wide was applied a solution of methyl cellulose containing a small percentage of an isocyanate curing agent. The application was done by passing the film through a conventional three roll coating head and through a drying oven at 125 degrees centigrade and rewinding the roll at the other end. Dry weight of the cross linked cellulose coating was about 5 grams per square metre (gsm).

A coating was then applied over the cellulose coating, comprising a magnetic pigment dispersed into a binder polymer dissolved in a solvent mix. This was applied as before, using the reverse roll coating head and drying oven, then the dried product was rewound. Dry weight of this coating was about 8 gsm.

A pressure sensitive adhesive, based on acrylic polymers, was coated over the magnetic coating by a transfer process. For this, a paper having a pre-applied coating of an "easy release" silicone was obtained. It was passed through a Meyer Bar coating head to apply the adhesive solution to the release side then through a drying oven at 120 degrees centigrade. The dry adhesive coating weight was 17 gsm. At the rewind end of the machine, the dry adhesive side was laminated to the magnetic coated side of the polyester film. The combined laminate was then wound up. After this the roll was put through a rewind slitter, where it was slit and wound up to give 16 mm wide rolls. This finished tape was used for application trials.

In application trials, the rolls were unwound a little at a time and the paper (which serves as an inter-liner) was peeled off. The magnetic coating remained fixed to the polyester film, with the adhesive side now showing. This was then laid down onto a card used for air transport board boarding passes and smoothed down by finger pressure. The polyester film was then pulled off, with minimal force being required, leaving the magnetic stripe on the card. Under magnification it could be seen that the magnetic coating had a very thin transparent coating over it. This was the cellulosic release material which had first been coated onto the polyester film.

### EXAMPLE 2.

A roll was obtained of polyester film 23 microns thick which already had on one side an easy release silicone coating. To this was applied on the uncoated side the cellulosic release coating followed by the magnetic pigment dispersion, all as in example 1.

However in this second example the adhesive was coated directly onto the magnetic coating and dried, followed by winding up without any form of inter-liner.

In trials, the roll was unwound, laid down onto a card coated with thermal ink and smoothed down by finger pressure. The polyester carrier film was then peeled off as before.

### EXAMPLE 3.

This was prepared as in example 2 above, with the exception that the cellulosic release coating was omitted and the dry weight of the magnetic coating was increased. This was applied to a card, but the polyester film was left in place as a protection over the magnetic layer.

### EXAMPLE 4.

This was as example 3 above, except that the adhesive was applied to the reverse, uncoated side of the polyester film. A release coated inter-liner was placed onto the substrate coating prior to winding up the rolls. This was applied to a fabric article, where the polyester film remained in place to give dimensional stability to the magnetic material.

## Claims

1. A tape (22) for applying a magnetic layer (26) to an article (20), comprising a substrate (30), the magnetic layer (26) which is supported on or by the substrate and which can be selectively magnetised to thereby store machine readable information, said tape being **characterized by** a pressure sensitive adhesive (24), and a release agent (32), such that when the tape (22) is arranged in a roll, the release agent (32) serves to prevent or at least reduce adhesion of the tape (22) to itself, facilitating unrolling of the tape, and such that the adhesive (24)can be pressed against the article (20) to adhere at least the magnetic layer (26) to the article.

2. A tape as claimed in claim 1, wherein the magnetic layer (26) comprises a magnetic pigment in a binder.

3. A tape as claimed in claim 2, wherein the magnetic pigment comprises particulate metal oxide.

4. A tape as claimed in claim 1 or claim 2, wherein the magnetic layer is formed from a solution applied to the substrate.

5. A tape as claimed in any preceding claim, wherein the adhesive (24) comprises acrylic polymer.

6. A tape as claimed in any of claims 1 to 4, wherein the adhesive comprises rubber and a tackifying resin.

7. A tape as claimed in any preceding claim, wherein the magnetic layer (26) is coupled to the substrate (30) in such a manner that the substrate can be removed, when the magnetic layer (26) has been adhered to the article (20) by means of the adhesive (24), without damage to the magnetic layer (26), leaving the magnetic layer adhered to and supported on the article.

8. A tape as claimed in claim 7, wherein a substrate-release (28) is interposed between the magnetic layer (26) and the substrate (30).

9. A tape as claimed in any preceding claim, wherein the release agent (32) is formed on or by a cover sheet disposed adjacent the adhesive layer and removable therefrom to expose the adhesive.

10. A tape as claimed in any of claims 1 to 8, wherein one face of the tape comprises the adhesive (24) and the other face of the tape comprises the release agent (32), so that the adhesive and release agent are juxtaposed when the tape is arranged in a roll.

11. A tape as claimed in any of claims 1 to 6, comprising in the following order:-
the substrate,
a substrate-release,
the magnetic layer,
the adhesive, and
a cover sheet serving as or bearing the release agent,
the cover sheet being removable to expose the adhesive and the substrate-release enabling the substrate to be removed, when the magnetic layer has been adhered to an article by means of the adhesive, without damage to the magnetic layer, leaving the magnetic layer adhered to and supported on the article.

12. A tape as claimed in any of claims 1 to 8, comprising in the following order:-
the release agent (32),
the substrate (30),
the magnetic layer (26), and
the adhesive (24),
such that when the tape is arranged in a roll, the adhesive and the release agent are juxtaposed.

13. A tape as claimed in any of claims 1 to 8, comprising in the following order:-
a cover sheet serving as or bearing the release agent,
the adhesive,
the substrate, and
the magnetic layer.

14. A tape as claimed in any preceding claim wherein the substrate is formed as a thin carrier film.

15. A method of applying to an article (20) a magnetic layer (26) which can be selectively magnetised to thereby store machine readable information, the method comprising:-
providing a rolled tape (48) which comprises the magnetic layer (26) supported on or by a substrate (30), a pressure sensitive adhesive (24) and a release agent (32), the release agent serving to prevent or at least reduce adhesion of the tape to itself while in the roll,
unrolling the tape (48) and exposing the adhesive (24),
applying the tape to the article (20) such that the adhesive (24) contacts the article and thereby adheres at least the magnetic layer to the article.

16. A method as claimed in claim 15, comprising the further step of removing the substrate (30) after the magnetic layer (26) has been adhered to the article, leaving the magnetic layer adhered to and supported on the article.

## Patentansprüche

1. Ein Band (22) zum Aufbringen einer Magnetschicht (26) auf eine Unterlage (20), umfassend ein Substrat (30), die Magnetschicht (26), die durch das Substrat gestützt wird und die selektiv magnetisiert werden kann, um dadurch für Lesegeräte lesbare Information zu speichern, **dadurch gekennzeichnet, dass** das Band charakterisiert ist durch einen druckempfindlichen Kleber (24), ein Trennmittel (32), dergestalt, dass, wenn das Band (22) aufgewickelt, das Trennmittel (32) dazu dient, die Gefahr des Verklebens des Bandes (22) mit sich selbst zu verhindern oder wenigstens zu reduzieren, um das Abrollen des Bandes zu erleichtern, und **dadurch gekennzeichnet, dass** der Kleber (24) auf die Unterlage gepresst wird, um schließlich die Magnetschicht (26) auf der Unterlage zu fixieren.

2. Ein Band, wie in Anspruch 1., **dadurch gekennzeichnet, dass** die Magnetschicht (26) Magnetpigment in einem Bindemittel enthält.

3. Ein Band, wie in Anspruch 2., **dadurch gekennzeichnet, dass** das Magnetpigment aus partikulärem Metalloxid besteht.

4. Ein Band, wie in Anspruch 1. und 2, **dadurch gekennzeichnet, dass** die Magnetschicht aus einer Lösung gebildet wird, die auf das Substrat aufgebracht wird.

5. Ein Band ,wie in den vorhergehenden Ansprüchen, **dadurch gekennzeichnet, dass** der Kleber (24) Acrylpolymere enthält.

6. Ein Band, wie in jedem der Ansprüche 1. bis 4., **dadurch gekennzeichnet, dass** der Kleber Kautschuk und klebriges Harz enthält.

7. Ein Band, wie in allen vorhergehenden Ansprüchen, **dadurch gekennzeichnet, dass** die Magnetschicht (26) an das Substrat (30) derart gekoppelt ist, dass das Substrat entfernt werden kann, wenn die Magnetschicht (26) mittels des Klebers (24) auf der Unterlage (20) fest verankert und stabilisiert ist, sodass beim Abziehen des Substrats die Magnetschicht (26) nicht beschädigt wird.

8. Ein Band, wie in Anspruch 7. **dadurch gekennzeichnet, dass** ein Substrat-Abtrennmittel (28) so angebracht ist, dass es zwischen Magnetschicht und dem Substrat liegt.

9. Ein Band, wie in allen vorhergehenden Ansprüchen, **dadurch gekennzeichnet, dass** die Trennmittelschicht (32) auf einem Deckblatt aufgebracht und so angeordnet ist, dass sie an die Kleberschicht angrenzt und von dort entfernt werden kann, um den Kleber freizugeben.

10. Ein Band, wie in den vorausgehenden Ansprüchen 1. bis 8., **dadurch gekennzeichnet, dass** eine Seite des Bandes den Kleber (24) enthält und die andere Seite das Trennmittel (32), sodass sich Kleberschicht und Trennschicht gegenüberliegen, wenn das Band aufgewickelt ist.

11. Ein Band, wie in den Ansprüchen 1. bis 6., **dadurch gekennzeichnet, dass** es folgenden Aufbau hat:
das Substrat
die Substrat-Trennschicht
die Magnetschicht
der Kleber, und
ein Deckblatt, das direkt als Trennmittel dient oder mit Trennmittel beschichtet ist.
Das Deckblatt kann entfernt werden, um Kleber und Substrat-Trennschicht freizusetzen, um das Substrat entfernen zu können ohne die Magnetschicht zu beschädigen, wenn die Magnetschicht auf der Unterlage durch den Kleber fixiert ist.

12. Ein Band, wie in jedem Anspruch 1. bis 8., **dadurch gekennzeichnet, dass** es folgenden Aufbau hat:
die Trennschicht (32)
das Substrat (30)
die Magnetschicht (26) und
den Kleber (24),
sodass, wenn das Band aufgewickelt ist, sich Kleber und Trennschicht gegenüberliegen.

13. Ein Band, wie in den Ansprüchen 1. bis 8., **dadurch gekennzeichnet, dass** es folgenden Aufbau hat:
ein Deckblatt, das als Trennschicht dient oder mit einem Trennmittel beschichtet ist.
der Kleber
das Substrat und
die Magnetschicht.

14. Ein Band, wie in Anspruch 13., **dadurch gekennzeichnet, dass** das Substrat als ein dünner Trägerfilm ausgebildet ist.

15. Eine Methode, um auf einer Unterlage (20) eine Magnetschicht (26) aufzubringen, die selektiv magnetisiert werden kann um mit einem Lesegerät Informationen lesen zu können, **dadurch gekennzeichnet, dass** sie aus folgenden Teilen besteht:
Ein auf einer Rolle aufgewickeltes Band (48), welches die Magnetschicht (26) auf oder durch das Substrat(30) stabilisiert, einen druckempfindlichen Kleber (24) und ein Trennmittel (32), wobei das Trennmittel dazu dient, in dem Wickel das Verkleben des Bandes mit sich selbst zu vermeiden oder mindestens stark zu reduzieren, und **dadurch gekennzeichnet ist, dass** sie folgende Abläufe gestattet:
Abrollen des Bandes (48) und Freisetzen des Klebers (24) und Aufbringen des Bandes auf der Unterlage (20), sodass der Kleber mit der Unterlage in Kontakt kommt und dabei schließlich die Magnetschicht auf der Unterlage fixiert.

16. Eine Methode, wie in Anspruch 15., **dadurch gekennzeichnet, dass** in einem weiteren Schritt das Substrat (30) entfernt wird, nachdem die Magnetschicht (26) auf der Unterlage fixiert und stabilisiert ist.

## Revendications

1. Un ruban (22) destiné à appliquer une couche magnétique (26) sur un article (20), et comportant un substrat (30). La couche magnétique (26) est soutenue sur ou par le substrat et peut être magnétisée pour mémoriser des informations exploitables par une machine; le ruban est **caractérisé par** la présence d'un adhésif sensible à la pression (24), et d'un produit de détachement (32), tels que quand le ruban (22) est enroulé sur un noyau, le produit de détachement (32) serve à empêcher ou à réduire l'adhérence entre les spires du ruban (22), facilitant le déroulement du ruban et tel que l'adhésif (24) puisse être appliqué sur l'article (20) pour y faire adhérer au moins la couche magnétique (26).

2. Un ruban selon la revendication 1, où la couche (26) comporte un pigment magnétique dans un liant.

3. Un ruban selon la revendication 2, où le pigment magnétique comporte un oxyde métallique particulaire.

4. Un ruban selon dans la revendication 1 ou selon la revendication 2, où la couche magnétique est formée d'une solution appliquée sur le substrat.

5. Un ruban selon les revendications précédentes, où l'adhésif (24) contient un polymère acrylique.

6. Un ruban selon les revendications 1 à 4, où l'adhésif est formulé à partir d'un caoutchouc et d'une résine tackifiante.

7. Un ruban selon les revendications précédentes, où la couche magnétique (26) est couplée au substrat (30) de sorte que le substrat puisse être pelé, après que la couche magnétique (26) ait été collée à l'article (20) au moyen de l'adhésif (24), sans dommage pour la couche magnétique (26) et la laissant supporter par l'article.

8. Un ruban selon la revendication 7, où un traitement de détachement (28) est intercalé entre la couche magnétique (26) et le substrat (30).

9. Un ruban selon les revendications précédentes, où le matériau de détachement (32) est couché sur ou formé par une feuille protectrice placée en contact avec la couche adhésive mais restant amovible pour démasquer l'adhésif.

10. Un ruban selon dans les revendications 1 à 8, où un côté du ruban comporte l'adhésif (24) et l'autre côté comporte le traitement de détachement (32), de sorte que l'adhésif et cette face traitée soient en vis à vis quand le ruban est enroulé.

11. Un ruban selon les revendications 1 à 6, comportant dans l'ordre suivant:
- le substrat,
- un traitement de détachement,
- la couche magnétique,
- l'adhésif, et
- une feuille protectrice qui sert de matériau anti-adhérent, ou qui est enduite de matière anti-adhérente, cette feuille protectrice étant amovible pour démasquer l'adhésif, et le traitement de détachement permettant au substrat d'être pelé quand la couche magnétique est fixée sur l'article au moyen de l'adhésif, ceci sans dommage pour la couche magnétique, et la laissant intacte et supportée par l'article.

12. Un ruban selon les revendications 1 à 8, comportant dans l'ordre suivant :
- le traitement de détachement (32),
- le substrat (30),
- la couche magnétique (26), et
- l'adhésif (24),
tels que quand le ruban est enroulé, l'adhésif et le traitement de détachement soient en vis à vis.

13. Un ruban selon dans les revendications 1 à 8, comportant dans l'ordre suivant :
- une feuille protectrice qui sert de matériau anti-adhérent, ou qui est enduite de matière anti-adhérente,
- l'adhésif,
- le substrat, et
- la couche magnétique.

14. Un ruban selon dans les revendications précédentes, où le substrat est un film mince porteur.

15. Une méthode pour appliquer sur un article (20) une couche magnétique (26) qui peut être sélectivement magnétisée pour mémoriser des informations qui seront ensuite exploitables par une machine de lecture,
la méthode comportant:
un ruban enroulé (48) qui comporte une couche magnétique (26) soutenue sur ou par un substrat (30), un adhésif sensible à la pression (24) et un traitement de détachement (32). Ce dernier servant à empêcher ou au moins réduire l'adhérence du ruban sur lui-même quand il est enroulé.
le déroulement du ruban (48) et l'exposition de l'adhésif (24),
l'application du ruban sur l'article (20) tel que l'adhésif (24) est mis en contact avec l'article et fait adhérer de ce fait au moins la couche magnétique à l'article.

16. Une méthode selon la revendication 15, comportant une étape supplémentaire consistant à enlever le substrat (30) après que la couche magnétique (26) ait adhéré à l'article, laissant la couche magnétique adhérente supportée par l'article.
